# FASCICULE DE BREVET EUROPEEN

(11) **EP 3 830 562 B1**
(45) Date de publication et mention de la délivrance du brevet: **11.11.2026**
(21) Numéro de dépôt: 19740592.1
(22) Date de dépôt: 23.07.2019
(51) Int. Cl.: G01N 29/04, G01N 29/50, G01N 29/46, G01N 29/44, G01N 29/24, G01N 29/22, G01N 29/14, G01N 29/07, G01N 29/06, B61L 23/04

(54) **CONTRÔLE DE SANTÉ DE RAILS**
INSPEKTION DER SCHIENENGESUNDHEIT
INSPECTION OF RAIL HEALTH

(30) Priorité: 01.08.2018 FR 1857202
(43) Date de publication de la demande: 09.06.2021
(73) Titulaire: Commissariat à l'Energie Atomique et aux Energies Alternatives, 75015 Paris (FR); ALSTOM Holdings, 93400 Saint-Ouen-sur-Seine (FR)
(72) Inventeur: MESNIL, Olivier, 91190 Gif sur Yvette (FR); CHAPUIS, Bastien, 78220 Viroflay (FR); DRUET, Tom, 94270 Le Kremlin Bicêtre (FR)
(74) Mandataire: Atout PI Laplace
(86) Numéro de dépôt international: PCT/EP2019/069777
(87) Numéro de publication internationale: WO 2020/025390

(56) Documents cités:
- WO-A1-2018/106677
- FR-A1- 3 060 743
- FR-A1- 3 073 289

## Description

### Domaine de l'invention

L'invention concerne le domaine de la métrologie et en particulier celui du contrôle non destructif de santé de structures élongées, par exemple industrielles.

### Etat de la Technique

Les voies ferrées comprennent des rails, structures élongées « unidimensionnelles » qui nécessitent d'être inspectées régulièrement pour valider leur intégrité structurelle (e.g. détection de défaut, fissure, d'amorce de cassure ou de cassure franche dans les rails, par exemple).

Les rails, de par leur forme élongée, constituent un guide d'onde pour la propagation des ondes, notamment des ondes élastiques. Différentes approches de détection de défauts existent, en particulier les techniques d'inspection dites *actives* (avec injection d'énergie i.e. d'ondes élastiques dans les structures à étudier) par contraste avec les techniques d'inspection dites *passives.*

Une onde élastique, correspond à une onde mécanique, c'est-à-dire à un phénomène de propagation d'une perturbation dans un milieu élastique, correspondant à un rail dans notre cas d'espèce, sans transport de matière. La perturbation se transmet de proche en proche et il y a transfert d'énergie sans transport de matière.

Les techniques *actives* (d'inspection par ondes guidées) consistent généralement à *générer* des ondes dans un guide d'onde, c'est-à-dire un rail correspondant à la structure à étudier, par exemple à l'aide de transducteurs piézoélectriques, puis à *mesurer* les propriétés desdites ondes (e.g. amplitude, fréquence, etc) à l'aide d'un ou de plusieurs capteurs placés sur la structure à étudier. De telles ondes sont communément appelées ondes guidées puisqu'elles se propagent dans un guide d'onde formé par le rail.

Selon la terminologie usitée en métrologie, un capteur reçoit une onde, effectue une mesure à partir de cette onde reçue et fournit en sortie un signal de mesure. Un « capteur » opère généralement en réception et un « transducteur » opère généralement en réception et/ou en émission. De ce point de vue, un capteur est une espèce spécifique de transducteur.

Les ondes guidées générées dans la structure à étudier peuvent se propager sur de grandes distances, a fortiori dans un rail. Les ondes guidées étant sensibles aux défauts, les mesures contiennent des informations concernant la « santé », l'état de la structure. Les mesures effectuées permettent de détecter des défauts d'une grande variété. Dans certaines conditions, il est également possible de localiser et de quantifier certains défauts. Un exemple de méthode *active* est notamment décrit dans le document de brevet US9797869.

Les techniques d'inspection passives, également appelées méthodes *passives* consistent à mesurer la propagation, dans la structure à étudier, d'ondes guidées « naturellement » présentes dans la structure (jet d'air sur une aile d'avion, bruit ambiant, etc). De manière générale, les méthodes passives présentent des avantages mais aussi quelques inconvénients (ou limitations) majeures. De manière générale, les méthodes passives sont avantageuses par rapport aux méthodes actives en ce qu'elles présentent moins de difficultés en termes de mise à l'échelle pour la production, l'intégration ou l'exploitation de masse (pas ou peu d'apport en énergie, etc). Un des problèmes techniques majeurs associés aux méthodes passives est le fait que la source n'est généralement pas contrôlée. Ces méthodes passives exigent donc des outils de traitement des signaux avancés pour interpréter les mesures effectuées passivement.

Dans le cas du ferroviaire, lors d'une inspection de maintenance, ponctuelle ou de routine, l'état d'un rail est évalué lors du passage d'un engin de maintenance (à faible vitesse), lequel génère des ondes élastiques, mesurées par des capteurs embarqués sur l'engin lui-même. Ces ondes élastiques peuvent comprendre des composantes acoustiques (ondes dites acousto-élastiques).

Les techniques de référence pour la détection de défauts dans les rails consistent à utiliser des ondes ultrasonores (à haute fréquence e.g. supérieur à 1 MHz), et non pas des ondes guidées, à l'aide de capteurs embarqués sur un véhicule de maintenance. Deux limitations principales s'ensuivent : la vitesse d'inspection (de l'ordre de 40km/h) et le contrôle incomplet de la section du rail (une partie du champignon et de l'âme uniquement).

L'article intitulé *«*Passive Extraction of Dynamic Transfer Function From Arbitrary Ambient Excitations: Application to High-Speed Rail Inspection From Wheel-Generated Waves» (par F. L. di Scalea, X. Zhu, M. Capriotti, A. Y. Liang, S. Mariani et S. Sternini, ASME J Non destructive Evaluation, 2017) qui s'inscrit dans le cadre des approches passives, décrit le développement et la mise en place d'un prototype de capteurs aériens fixé à l'avant d'un train et mesurant les ondes guidées dans le rail. Lors du déplacement du train, les capteurs mesurent les ondes dans les rails, permettant de contrôler la zone inter-capteurs (quelques dizaines de centimètres), permettant de scanner la quasi-intégrité de la table de roulement sur toute la longueur des rails sur lesquelles passe le train. Cette méthode présente des limitations.

D'autres exemples de méthodes passives sont décrites dans la thèse de Doctorat *«* Tomographie passive par ondes guidées pour des applications de contrôle santé intégré » (Druet, T, Université de Valenciennes et du Hainaut-Cambresis, 2017). Le sujet des structures élongées n'y est néanmoins pas abordé.

Certaines approches spécifiques aux rails sont décrites dans la thèse de Doctorat intitulée « Etude et développement d'une plateforme de communication pour les réseaux de capteurs acoustiques sans fil : application au contrôle-santé des rails par corrélation du bruit ambiant » (Sadoudi L, Université de Valenciennes et du Hainaut-Cambresis, 2016). Les systèmes décrits présentent des limitations.

Le document WO 2018/106677 A1 concerne un appareil d'inspection d'une voie ferrée comprenant deux capteurs passifs. Les capteurs détectent des signaux correspondant à une réponse de la voie ferrée à un mouvement d'une roue de voiture ferroviaire. Un contrôleur génère, sur la base desdits signaux, une fonction de transfert correspondant à la réponse de la voie ferrée et déduit la présence de défauts dans la voie ferrée.

Le document FR 3 060 743 A1 concerne un procédé de contrôle de santé intégré d'une structure, comprenant une étape d'acquisition d'un bruit ambiant se propageant dans la structure au moyen d'une paire de capteurs d'ondes élastiques, une étape d'estimation d'une fonction représentative d'une réponse impulsionnelle de la structure, une étape d'extraction d'au moins une courbe de dispersion de la propagation élastique dans la structure et une étape d'estimation d'au moins un paramètre indicatif d'une propriété mécanique de ladite structure.

Il existe un besoin pour des procédés et des systèmes avancés pour la détection d'anomalies dans les structures élongées, et en particulier pour des méthodes efficaces et fiables, permettant d'inspecter de très grandes distances (e.g. plusieurs centaines ou milliers de kilomètres pour les réseaux ferroviaires) et ce à des coûts raisonnables.

### Résumé de l'invention

L'invention concerne des procédés et des systèmes pour l'inspection d'un rail par ondes guidées, le rail étant instrumenté par des capteurs. Le procédé comprend les étapes, telles que définies dans la revendication 1.

Le procédé comprend donc des étapes d'inspection par ondes guidées en mode passif sur une voie instrumentée.

En effet, les modes de réalisation de l'invention décrivent des systèmes et des procédés pour la détection de défaut(s), d'amorce(s) de rupture ou de rupture(s) franche(s) dans une structure élongée, e.g. un rail. L'inspection par ondes guidées est cette fois passive, i.e. utilise le bruit généré par le passage des trains eux-mêmes et/ou de véhicules de maintenance (lors de l'exploitation de la voie), lequel bruit est capté, mesuré et analysé par des capteurs disposés sur la voie ferrée.

Avantageusement, le passage de trains sur les rails est utilisé de manière opportuniste pour évaluer la santé structurelle des rails. Les procédés et systèmes selon l'invention exploitent les ondes générées par le passage d'un train sur les rails (contact roue-rail). Autrement dit, l'invention peut éviter la génération active ou l'excitation d'ondes guidées, impliquant généralement une consommation énergétique significative.

Selon l'invention, le mode passif selon l'invention coexiste avec les implémentations actives. Par exemple, l'analyse passive peut permettre une localisation rapide et grossière des défauts, qui ultérieurement peuvent être analysés plus finement avec un dispositif actif.

De manière générale, l'invention est avantageuse pour toutes les industries utilisant des rails ou câbles sur de longues distances (e.g. structures foraines, réseaux de câbles, installations portuaires, etc). Spécifiquement, l'invention est particulièrement avantageuse dans le secteur ferroviaire (trains, métros, tramways, etc).

Avantageusement, les modes de réalisation selon l'invention permettent : d'éviter toute génération d'ondes via l'utilisation de transducteurs dédiés (menant donc à une réduction significative de l'énergie nécessaire), d'utiliser des capteurs n'ayant pas la faculté de générer des ondes élastiques, par exemple des capteurs réseaux de Bragg dans des fibres optiques ; de bénéficier de distances d'inspection bien plus grandes en mode passif qu'en mode actif (les sources passives non contrôlées sont potentiellement bien plus énergétiques, e.g. cas du TGV, que les sources actives, permettant *a priori* de contrôler de plus grandes distances, et conduisent également à une réduction du nombre de capteurs nécessaire pour contrôler une unité de longueur).

### Description des figures

D'autres caractéristiques et avantages de l'invention apparaîtront à l'aide de la description qui suit et des figures des dessins annexés dans lesquels:
La figure 1 illustre schématiquement un système selon l'état de l'art pour l'inspection d'un rail;
La figure 2 est une représentation schématique partielle d'un système d'inspection de rail selon l'invention, ledit système d'inspection comprenant une pluralité de capteurs équipant un rail;
La figure 3 est une représentation schématique partielle d'un système d'inspection de rail selon l'invention, ledit système comprenant une pluralité de capteurs répartis le long d'un rail sur lequel un véhicule ferroviaire circule;
La figure 4 est une représentation graphique de l'amplitude en fonction du temps de quatre signaux enregistrés, au cours de l'exécution d'un procédé d'inspection de rail selon l'invention, par les capteurs représentés sur la figure 3 lors du passage du véhicule ferroviaire sur le rail auquel ils sont associés.
La figure 5 est une représentation schématique graphique de signaux reconstruits à partir d'un calcul d'inter-corrélation des signaux représentés à la figure 4, un premier signal reconstruit étant obtenu à partir des signaux mesurés par les capteurs C1 et C2 de la figure 3, un deuxième signal reconstruit étant obtenu à partir des signaux mesurés par les capteurs C1 et C3, et un troisième signal reconstruit étant obtenu à partir des signaux mesurés par les capteurs C1 et C4.
La figure 6 illustre des exemples d'étapes du procédé d'inspection de rail selon l'invention;
La figure 7 est une représentation schématique d'une installation ferroviaire comprenant deux voies ferrées équipées d'un système d'inspection de rail selon l'invention, ledit système comprenant plusieurs groupes de capteurs équipant des rails des voies ferrées, chaque groupe de capteurs étant relié à un nœud respectif de traitement de signaux issus des capteurs ;
La figure 8 illustre un exemple de structure d'un des nœuds de la figure 7.

### Description détaillée de l'invention

Il est décrit un procédé pour l'inspection d'un rail (par ondes guidées), ledit rail étant instrumenté par au moins un capteur recevant des ondes se propageant dans le rail lors du passage d'un train ou d'un véhicule roulant sur le rail le procédé comprenant les étapes consistant à : recevoir des signaux de mesure depuis ledit au moins un capteur, lors du passage d'un train ou d'un véhicule roulant sur le rail; à partir du ou des signaux mesurés, déterminer une fonction représentative de la réponse impulsionnelle du rail (ou de la réponse impulsionnelle du système « rail-capteurs », i.e. avantageusement de l'ensemble formé par le rail et le au moins un capteur.

La réponse impulsionnelle du rail décrit la propagation des ondes dans le rail. Elle correspond avantageusement à la fonction de Green (d'un milieu ou d'une structure ou d'un espace) qui désigne la solution d'une équation différentielle (ou aux dérivées partielles) linéaire à coefficients constants et décrit la propagation des ondes dans cet espace (terminologie de « propagateur » par Feynman). La fonction de Green d'une structure donnée ne peut être qu'approchée, i.e. par une ou plusieurs fonctions représentatives de la fonction de Green.

En d'autres termes, la réponse impulsionnelle du rail est unique. Les fonctions représentatives de cette réponse impulsionnelle sont plurielles. Une fonction représentative de la réponse impulsionnelle correspond d'une certaine manière à une vue partielle de cette réponse impulsionnelle (schématiquement à un fenêtrage spectral de la réponse impulsionnelle et/ou une convolution de la réponse impulsionnelle avec la réponse d'un capteur).

Dans un mode de réalisation, le procédé comprend l'étape consistant à déterminer l'existence d'un ou de plusieurs défauts dans le rail à partir de ladite fonction représentative de la réponse impulsionnelle du rail.

Le terme « défaut » désigne un écart par rapport à une situation normale ou nominale. Un défaut peut être une « anomalie » ou une « valeur anormale » ou une « valeur extrême » ou une « dégradation » ou un « endommagement ». Un défaut peut être en matière ferroviaire : une amorce de rupture, comme une corrosion ou une fissuration, et/ou une rupture franche. Un défaut peut se déterminer par l'application de seuils (ou de plages de seuils) prédéfinis.

Dans un mode de réalisation, le procédé comprend l'étape consistant à déterminer la position d'un ou de plusieurs défauts dans le rail (par exemple à partir de la fonction représentative de la réponse impulsionnelle du rail.

Dans un mode de réalisation, le procédé comprend l'étape consistant à caractériser un ou plusieurs défauts, notamment en matière de nature, de taille, d'orientation dans l'espace ou de géométrie, par analyse d'amplitude et/ou de fréquence et/ou par analyse de la forme du signal et/ou par analyse du spectre fréquentiel des signaux de mesure et/ou de la fonction représentative de la réponse impulsionnelle du rail et/ou par identification d'un changement de mode de propagation d'au moins une des ondes se propageant dans le rail.

### Défauts

Dans un mode de réalisation, le procédé comprend l'étape consistant à caractériser un ou plusieurs défauts, notamment en matière de nature, de taille, d'orientation dans l'espace ou de géométrie.

Un défaut peut notamment être orienté horizontalement, ou verticalement. En fonction de l'analyse des signaux, la position et la taille peuvent être estimées. Par apprentissage ou par comparaison avec des abaques tirés de modèles mathématiques ou numériques, une caractérisation quantitative peut permettre de déterminer un type de défaut (corrosion, fissure, discontinuité, etc).

La caractérisation d'un défaut peut se faire de différentes manières, suivant les configurations. Par caractérisation, il peut être entendu qu'il est déterminé la *nature* du défaut (e.g. amorce de fissure, rupture franche, corrosion, ...), et/ou qu'il est déterminé sa *taille* et/ou son *orientation* (e.g. orientation « moyenne » car les défauts sont rarement droits) et/ou qu'il est déterminé sa *géométrie* (atteignable dans le cas d'un très grand nombre de capteurs)

Dans un mode de réalisation, la caractérisation d'un défaut se fait par diagnostic différencié entre le signal reçu se transmettant via le champignon du rail et celui se transmettant via l'âme du rail. Par exemple si le signal se transmet vers une extrémité du rail et pas de l'autre, il est possible de déterminer approximativement l'étendue du défaut ainsi que sa position dans la section du rail. Dans le cas où aucun signal n'est transmis, il est probable que la rupture du rail est quasi-complète.

Dans un mode de réalisation, à côté de méthodes fondées sur *l'inter-corrélation* des paires de signaux, d'autres méthodes d'analyses et de post-traitement peuvent être appliquées, notamment des méthodes basées sur la corrélation des signaux, une méthode fondée sur un Filtre Inverse Passif (FIP) ou une étape de type C-3.

### Analyse de forme

Dans un mode de réalisation, la caractérisation d'un défaut se fait par analyse de la forme du signal, laquelle peut renseigner sur la géométrie du défaut.

### Analyse amplitude/fréquence

Dans un mode de réalisation, la caractérisation d'un défaut se fait par analyse du spectre fréquentiel du signal mesuré (e.g. certaines fréquences peuvent être plus réfléchies par le défaut que d'autres ; dans ce cas, des comparaisons avec des données simulées sont avantageuses).

### Auto-corrélation et inter-corrélation

Dans un mode de réalisation, l'étape consistant à déterminer une fonction représentative de la réponse impulsionnelle du rail est réalisée par auto-corrélation ou inter-corrélation.

Dans un mode de réalisation, l'étape consistant à déterminer une fonction représentative de la réponse impulsionnelle du rail et avantageusement de l'ensemble formé par le rail et deux capteurs distants est réalisée à partir du calcul de l'inter-corrélation C_{AB} des signaux u_{A} et u_{B} de bruit d'ondes élastiques dans le rail mesuré simultanément au niveau de chaque capteur, c'est à dire en A et en B : ${C}_{AB} \left(t\right) = \int {u}_{A} \left(τ\right) {u}_{B} \left(t+τ\right) dτ$ où *t* est le temps.

Lorsque le bruit mesuré est suffisamment long, on dit que l'inter-corrélation converge vers une fonction représentative de la réponse impulsionnelle (ou fonction de Green) du rail, de préférence de l'ensemble formé par le rail et les capteurs A et B. C'est cette fonction qui sera analysée pour déterminer la présence ou non de défauts dans le rail. Elle est comparable au signal qu'on obtiendrait en actif si on avait émis une onde en A et mesuré des propriétés caractéristiques de cette onde en B (ou inversement).

Dans le cas où les deux points A et B mentionnés ci-dessus sont confondus et où un seul capteur est utilisé, une auto-corrélation est réalisée au lieu d'une inter-corrélation. La fonction représentative de la réponse impulsionnelle obtenue est alors comparable au signal qu'on pourrait obtenir en actif en pulse-écho (émission/réception de signaux réalisée via un même transducteur).

Dans un mode de réalisation, la caractérisation d'un défaut se fait par analyse de l'amplitude du signal réfléchi (en configuration pulse-écho) et/ou transmis (en configuration de transmission). Un plus gros défaut réfléchira plus d'énergie, et en transmettra moins. En combinant la technique de pulse-écho et d'analyse en transmission, le diagnostic est affiné (en théorie la somme de l'énergie transmise et réfléchie est invariante mais il peut y avoir de l'énergie piégée au niveau du défaut, et ce de manière d'autant plus forte que le défaut est de biais).

Dans un mode de réalisation, le rail est instrumenté par au moins deux capteurs distants l'un de l'autre et recevant des ondes se propageant dans le rail lors du passage d'un train ou d'un véhicule roulant sur le rail, le procédé comprend les étapes consistant à : recevoir des signaux de mesure depuis lesdits au moins deux capteur, lors du passage d'un train ou d'un véhicule roulant sur le rail; déterminer une fonction représentative d'une réponse impulsionnelle du rail, avantageusement de l'ensemble formé par le rail et les au moins deux capteurs, en effectuant un calcul d'inter-corrélation entre les signaux mesurés.

### Modes guidés

Au-delà de la détection de rupture franche, l'invention vise à détecter des amorces de rupture. Dans un arrangement successif de 4 capteurs (en mode actif ou passif), après émission dans les deux directions de l'espace (droite et gauche) par un capteur C2, si un capteur C1 reçoit un signal cela indique que C2 fonctionne bien. Si C3 ne reçoit pas de signal, cela signifie que soit C3 est en panne, soit qu'une rupture existe entre C2 et C3. Le capteur C4 permet alors de confirmer l'une ou l'autre des hypothèses. La détermination de la position d'un défaut constitue la première étape avant la quantification ou caractérisation dudit défaut.

Dans un mode de réalisation, un mode guidé est sélectionné (qui concentre le maximum d'énergie dans la zone de l'amorce du défaut). En effet, à une fréquence donnée, il existe plusieurs modes guidés qui peuvent se propager dans un rail. Aux fréquences de travail (généralement ~40 kHz), il existe au moins une vingtaine de modes guidés. Certains modes sont mieux capturés par certains emplacements de capteurs (e.g. âme versus sous le champignon).

### Conversion de modes guidés

Dans un mode de réalisation, la caractérisation d'un défaut se fait par conversion de modes guidés. Un défaut peut faire passer l'énergie dans l'âme vers le champignon, ou inversement, s'il est suffisamment grand et engendrer une conversion de mode de l'onde se propageant dans le rail. En d'autres termes un défaut peut faire passer une onde se propageant selon un premier mode en une onde se propageant selon un deuxième mode. Il est donc possible en pratique de faire varier les positions des capteurs (par exemple entre champignon et âme pour analyser ces conversions de mode). Dans un mode de réalisation, une conversion de mode est identifiée par le fait de disposer N (~20 minimum) capteurs espacés régulièrement (tous les 20 cm environ) et de post-traiter les signaux à l'aide d'une transformée de Fourier bidimensionnelle (en espace et en temps). Par ailleurs, des méthodes temps-fréquence permettent d'identifier des conversions de mode à l'aide d'un seul capteur (e.g. des spectrogrammes réalloués, des scalogrammes réalloués, la technique « Hilbert-Huang Transform » ou encore la « SyncroSqueezing Transform »).

Dans un mode de réalisation, l'étape consistant à déterminer une fonction représentative de la réponse impulsionnelle du rail est réalisée - par corrélation de coda de corrélations entre capteurs, et/ou - par une étape de Filtre Inverse Passif, de telles méthodes de traitement de signaux étant décrites ci-dessous..

### Corrélation de coda de corrélations

Dans un mode de réalisation, l'étape consistant à déterminer une fonction représentative de la réponse impulsionnelle entre les capteurs est réalisée par corrélation de coda de corrélations entre capteurs, et/ou par une étape de Filtre Inverse Passif. La coda d'un signal ultrasonore est la fin du signal. Elle est constituée des réflexions et diffusions multiples des ondes au sein de la structure, au contraire du début du signal constitué des ondes se propageant suivant des trajets directs, et qui sont dites « balistiques ».

Dans un mode de réalisation, le post-traitement comprend une « corrélation de coda de corrélations » (C-3) entre capteurs. Ce développement est entièrement optionnel. La "corrélation de coda de corrélations" consiste, pour un couple de points de mesure A et B, correspondant à deux capteurs, pour lequel on cherche à déterminer la réponse impulsionnelle, à choisir un point de mesure supplémentaire C (situé ni en A ni en B); à corréler les mesures pour chacun des points A et B avec ce point de mesure quelconque C; à corréler la coda de ces corrélations pour obtenir la corrélation entre les points de mesure A et B. Le passage par le point supplémentaire C complexifie les opérations de calcul, mais permet, dans certaines situations, de mieux converger (i.e. d'avoir un signal plus propre et donc plus exploitable) vers la réponse impulsionnelle entre A et B que le calcul direct. On appelle réponse impulsionnelle entre A et B, la réponse impulsionnelle de l'ensemble formé par le rail et les deux capteurs positionnés aux points de mesure A et B.

### Filtre inverse passif

Un filtre inverse passif détermine les fonctions représentatives de la fonction de Green, c'est-à-dire de la réponse impulsionnelle du rail à partir de la mesure du bruit (champ élastique diffus).

La méthode d'analyse du champ élastique diffus par filtre inverse passif permet en effet de rehausser le signal i.e. de récupérer et d'exploiter la moindre énergie (éventuellement) présente dans chaque direction de l'espace. Par suite, l'arrangement physique des capteurs est moins critique que dans le cas d'une analyse par corrélation. Aux limites et en pratique, les positions des capteurs peuvent ne plus dépendre des sources de bruit (ambiant ou artificiel).

Dans un mode de réalisation, l'arrangement (topographie/topologie) des capteurs peut être asservi à des étapes d'imagerie (e.g. cartographie, tomographie).

Dans un mode de réalisation, l'étape consistant à déterminer par filtre inverse passif une fonction représentative de la réponse impulsionnelle de la structure à analyser, comprend les étapes consistant à (i) découper, par exemple temporellement, les signaux mesurés sur tous les capteurs, c'est-à-dire les données mesurées en fonction du temps, en une pluralité de sous-vecteurs ou pseudos-sources et (ii) décomposer en valeurs singulières des matrices de propagation monochromatique.

Dans un mode de réalisation, les valeurs singulières qui sont obtenues peuvent être partitionnées dans deux groupes, un premier groupe de valeurs représentatives de l'information physique d'intérêt et un second groupe de valeurs (qui peuvent ultérieurement être mises à zéro). Différentes méthodes permettent de déterminer la valeur de seuillage (en particulier selon les régimes de décroissance des valeurs singulières lorsqu'elles sont ordonnées).

Dans un mode de réalisation, l'étape consistant à déterminer par filtre inverse passif une fonction représentative de la réponse impulsionnelle de la structure à analyser comprend les étapes consistant à a) découper le signal temporel mesuré en une pluralité de sous-vecteurs ou pseudos-sources; b) décomposer en valeurs singulières des matrices de propagation monochromatique déterminées à partir des pseudos-sources dans le domaine fréquentiel; c) obtenir une fonction représentative de la réponse impulsionnelle dans le domaine temporel par transformée de Fourier inverse.

Dans un mode de réalisation, l'étape consistant à déterminer par filtre inverse passif des fonctions représentatives de la réponse impulsionnelle de la structure pour chacun des couples de capteurs interrogés, comprend les étapes consistant à : - recevoir les signaux de mesure du champ élastique diffus depuis N capteurs physiques (par exemple FBG pour « Fiber Bragg Grating » et/ou PZT pour « Piezoelectric » et/ou EMAT pour « Electro-Magnetic Acoustic Transducer »), de manière sensiblement simultanée, le champ élastique diffus ne respectant pas nécessairement une condition d'équipartition en énergie, lesdites mesures déterminant une pluralité de vecteurs temporels ;- diviser lesdits vecteurs temporels en une pluralité de sous-vecteurs ou pseudos-sources ;- pour chacune des pseudos-sources, effectuer une transformée de Fourier en fréquence w ; - pour chaque fréquence w : 1) déterminer la matrice de propagation monochromatique H(w) reliant les pseudos-sources aux points de mesure ; 2) déterminer une pluralité de valeurs singulières par décomposition en valeurs singulières de chaque matrice H(w) ; 3) ordonner et seuiller lesdites valeurs singulières en un premier groupe de valeurs représentatives de l'information physique d'intérêt et un second groupe de valeurs mises à zéro ; 4) déterminer N^2 fonctions représentatives de la réponse impulsionnelle de la structure (une pour chacun des couples de capteurs physiques réels) ; - déterminer N^2 fonctions temporelles représentatives de la réponse impulsionnelle de la structure en concaténant les transformées de Fourier inverse des N^2 fonctions représentatives de la réponse impulsionnelle calculées dans le domaine fréquentiel.

### Les sous-vecteurs peuvent être appelés des « pseudos-sources »

### Variations des positions des capteurs

Dans un mode de réalisation, le procédé comprend en outre l'étape consistant à caractériser un ou plusieurs défauts, en faisant varier une ou plusieurs positions des capteurs et/ou en en sélectionnant des capteurs parmi une pluralité, par exemple lors de différentes itérations de l'étape de détermination, chaque étape de détermination étant réalisée à partir des signaux de mesure issus des capteurs sélectionnés.

Ces variations de positions peuvent être obtenues de diverses manières, physique et/ou logique. Dans un mode de réalisation, les positions réelles des capteurs peuvent être physique ajustées. Dans un mode de réalisation, une sélection parmi une pluralité de capteurs peut être effectuée. Par exemple, si une portion de voie a été instrumentée par un grand nombre de capteurs, il est possible de procéder à la sélection d'un sous-ensemble de capteurs, éventuellement de manière évolutive dans le temps, afin d'explorer ou de sonder la voie.

### Imagerie

Dans un mode de réalisation, le procédé comprend l'étape consistant à déterminer une ou plusieurs images comprenant une cartographie de la propagation des ondes élastiques dans la structure, les images étant déterminées par une ou plusieurs méthodes d'imagerie sélectionnées parmi une méthode d'imagerie par tomographie, une méthode d'imagerie par échographie, une méthode d'imagerie par focalisation en tout point, une méthode d'imagerie par synthèse d'ouverture, une méthode d'imagerie par filtrage spatial, ou une méthode d'imagerie à haute résolution.

Dans un mode de réalisation, les mesures sont reçues simultanément par les capteurs et/ou étant synchronisées. La synchronisation peut être du fait de l'utilisation d'un matériel unique d'acquisition. La synchronisation peut être effectuée *a posteriori* (signaux « resynchronisés », ou « postsynchronisés »).

Dans un mode de réalisation, le train ou véhicule roulant sur le rail est associé à un ou plusieurs paramètres internes comprenant un type de train, un type de roue, un poids à l'essieu et/ou une vitesse de roulement ; dans lequel à l'étape de réception le procédé comprend l'étape consistant à acquérir des signaux de mesure en fonction d'un ou plusieurs paramètres externes comprenant un premier instant relatif au début des mesures, un deuxième instant relatif à la fin des mesures, une durée des mesures, et/ou une fréquence d'échantillonnage ; et dans lequel le procédé comprend en outre une étape consistant à modifier ou ajuster un ou plusieurs des paramètres externes en fonction d'un ou plusieurs paramètres internes.

Dans un mode de réalisation, un défaut est déterminé par application de seuils prédéfinis, lesdits seuils prédéfinis étant déterminés par référence à un état réel, par exemple par rapport à un état du rail étant connu comme sain ou par rapport à un état calibré dudit rail, ou par référence à un état simulé du rail.

Un modèle mathématique peut en effet permettre la modélisation du contact roue-rail et de la déperdition d'énergie dans le rail de l'énergie acousto-élastique. Cette modélisation permet par suite de simuler différents défauts (tailles, positions, etc) et de construire des abaques théoriques de ce que devraient mesurer les capteurs. Les données de mesure ne sont donc pas limitées aux mesures réelles mais peuvent se fonder au moins en partie sur des modélisations.

Dans un mode de réalisation, les seuils prédéfinis sont déterminés par apprentissage. L'apprentissage (supervisé ou non, par *Deep Learning,* par *Support Vector Machines,* par (Rotational) Random Forest, par logique Bayesienne, par réseaux de neurones etc) peut être entraîné sur des données réelles et/ou calculées.

Dans un mode de réalisation, le procédé comprend l'étape consistant à comparer les mesures déterminées à partir de passages successifs de trains sur le rail '(ou comparer les fonctions représentatives de la réponse impulsionnelle du rail déterminées lors de différentes étapes de détermination réalisées lors de passages successifs de trains ou de véhicules sur le rail)

La charge/poids à l'essieu et la vitesse train influent peu sur les résultats (un TGV ou un véhicule de maintenance permettent sensiblement la même exploitation des signaux à périmètre constant). Mais précisément, il peut être avantageux de faire varier ce périmètre à mesure de la circulation des trains sur la voie, i.e. de modifier les paramètres de mesure (externes propres à la mesure), les paramètres internes (propres au train) étant imposés (cas usuel). Par exemple, quand un défaut a été détecté une première fois, il est possible d'ajuster les filtres fréquentiels.

Autrement dit, étant donné les passages répétés de trains en mode passif, il peut être avantageux de changer les paramètres d'acquisition entre chaque passage (e.g. filtrage des signaux, durées ou longueurs d'acquisition, fréquence d'échantillonnage, etc) afin d'interroger la structure dans des conditions différentes et complémentaires. Chaque train ayant aussi ses caractéristiques propres (e.g. masse, nombre d'essieux, ...), les ajustements successifs peuvent avantageusement permettre de couvrir un spectre fréquentiel qui se « complète » au fur et à mesure des passages. Par ailleurs, il a été fait mention des étapes d'apprentissage machine pouvant être mis en œuvre.

Dans un mode de réalisation, le procédé comprend l'étape consistant à émettre une alerte au conducteur et/ou au système de régulation du trafic et/ou une étape consistant à émettre une commande de freinage (lesdites étapes étant par exemple déclenchées en fonction du résultat de l'étape de détermination de l'existence d'un ou de plusieurs défauts).

Il est décrit un système pour l'inspection d'un rail par ondes guidées, comprenant : - un rail instrumenté par une pluralité de capteurs, lesdits capteurs étant *associés* au rail, et étant configurés pour mesurer et communiquer des mesures d'ondes acousto-élastiques lors du passage d'un train ou d'un véhicule roulant sur le rail ; des ressources de calcul et/ou de mémoire configurées pour déterminer une fonction représentative de la réponse impulsionnelle entre les capteurs et/ou l'existence et/ou la position et/ou la caractérisation d'un défaut dans le rail.

Dans un mode de réalisation, les capteurs sont choisis parmi des transducteurs piézoélectriques et/ou des capteurs à réseau de Bragg sur fibre optique, et/ou des transducteurs magnéto-acoustique de type EMAT.

Dans un mode de réalisation, un/chaque capteur est choisi parmi des transducteurs piézoélectriques et/ou des capteurs à réseau de Bragg sur fibre optique, et/ou des transducteurs magnéto-acoustiques de type EMAT et/ou des transducteurs magnétostrictifs.

D'autres capteurs peuvent être utilisés, notamment un ou plusieurs lasers impulsionnels (fibrés ou non), un ou plusieurs CMUT (pour « Capacitive micromachined ultrasonic transducers »), un ou plusieurs PMUT (pour « Piezoelectric Micromachined Ultrasonic Transducers »), des accéléromètres MEMS, des PVDF, etc.

Il est à noter que des dépôts de couches minces piézoélectriques sur le rail peuvent être avantageux, surtout en mode passif.

Dans un mode de réalisation, un capteur est un capteur amovible. L'association peut être mécanique et/ou chimique et/ou électromagnétique, permanente ou temporaire. Le placement des capteurs sur la section du rail et/ou le long du rail peut être modifié ou ajusté par drone et/ou par robot et/ou par un véhicule de maintenance.

Dans un mode de réalisation, un capteur ou plusieurs capteurs sont fixés sous le champignon du rail et/ou sur l'âme du rail. Selon les configurations, les parois « interne » et/ou « externe » de l'âme ou du champignon peuvent être utilisées.

L'association peut être mécanique et/ou chimique et/ou électromagnétique, permanente ou temporaire. Le placement des capteurs sur la section du rail et/ou le long du rail peut être modifié ou ajusté par drone et/ou par robot et/ou par un véhicule de maintenance.

Selon d'autres modes de réalisation, le positionnement des capteurs peut être optimisé selon le profil du rail considéré. Un rail de tramway par exemple est généralement asymétrique et certains placements peuvent être plus avantageux que d'autres.

La configuration généralement mise en œuvre pour la détection d'une rupture ou d'un rail comprend une pluralité de capteurs C1-Cn. En mode actif, les ondes sont émises de manière égale vers la droite et vers la gauche. De la même manière, en mode passif, les capteurs sont sensibles de manière égale aux ondes venant de droite et de gauche. Pour détecter des amorces de fissures et être le plus sensible possible, il est avantageux de ne pas travailler en transmission entre deux capteurs mais en « pulse-écho » (le même capteur est utilisé comme émetteur et comme récepteur). Un défaut éventuel sera détecté car il va réfléchir une petite partie de l'onde vers le récepteur qui va détecter cet écho. L'inconvénient de cet arrangement est qu'il sera ne sera pas déterminé si l'écho vient d'un défaut à droite ou à gauche. Pour y remédier, il est avantageux de placer deux capteurs côte à côte, par paires. Cet arrangement est avantageux mais reste optionnel.

Il est alors possible, en ajustant les déphasages entre les capteurs placés côte à côte à l'émission (et/ou à la réception), de piloter l'émission (respectivement la réception) de manière préférentielle alternativement vers la droite ou vers la gauche. Le déphasage est calculé pour créer des interférences constructives de l'onde émise (et/ou reçue) vers un côté et destructive vers l'autre côté. Cette option permet de choisir de quel côté émettre l'onde et/ou d'identifier si un écho donné vient de la droite ou de la gauche et ainsi lever l'ambigüité de la configuration où un seul capteur est utilisé.

Selon des modes de réalisation de l'invention, jusqu'à quatre capteurs peuvent être placés au même « point de mesure » : deux capteurs peuvent être placés sous le champignon tandis que deux capteurs seront placés sur l'âme, de manière à pouvoir différencier en aval la réponse entre âme et champignon, et ainsi renforcer l'analyse quant à la présence d'amorces de défaut.

Dans un mode de réalisation, un capteur communiquant est alimenté par l'énergie vibratoire du roulement de trains sur le rail. Un capteur peut être protégé par une mesure technique de protection. Un capteur peut comprendre une alimentation autonome en énergie, comme par une alimentation par énergie solaire et/ou par énergie vibratoire et/ou énergie éolienne (dans un tunnel).

Dans un mode de réalisation, le système comprend en outre une ou plusieurs sources de bruit élastodynamique comme des transducteurs piézoélectriques configurés pour compléter de manière active l'inspection passive par ondes guidées.

### Modes actif et/ou passif

Il doit être noté que les modes de réalisation décrits n'excluent pas les approches actives, bien au contraire. Le fait d'avoir des capteurs à demeure (mode passif) permet d'exploiter une multitude de mesures avec le même système d'acquisition ce qui permet de renforcer les analyses et le diagnostic.

La combinaison ou la séquence actif/passif permet des investigations approfondies et complémentaires. La solution passive peut être plus économe en énergie (puisqu'il n'y a pas d'énergie ultrasonore injectée dans la structure par le système).

Le système selon l'invention comprend au moins un transducteur configuré pour *déclencher et*/*ou compléter* de manière active l'inspection passive par ondes guidées.

Dans un mode de réalisation, le rail étant instrumenté par au moins un transducteur, le procédé comprend, suite à l'étape de détermination de la réponse impulsionnelle les étapes consistant à - générer des ondes dans le rail à partir du transducteur ; - mesurer au moins une grandeur caractéristique desdites ondes à l'aide du au moins un capteur, et - déterminer l'existence d'un ou de plusieurs défauts dans le rail à partir de ladite fonction représentative de la réponse impulsionnelle du rail et/ou de ladite une grandeur caractéristique.

Dans un mode de réalisation, la réponse impulsionnelle du rail est la réponse impulsionnelle de l'ensemble formé par le rail et ledit au moins un capteur.

Selon l'invention, un système pour l'inspection d'un rail peut fonctionner de manière nominale en passif, uniquement lors des passages des trains par exemple, et en cas de suspicion de défaut dans les signaux (écart(s) par rapport à des seuils ou plages de seuils prédéfinis), le procédé peut comprendre une analyse plus poussée en actif en maîtrisant mieux les conditions de génération des ondes (e.g. utilisation d'un spectre d'excitation optimal, par exemple non lié au spectre vibratoire du train, utilisation d'une pluralité de fréquences, mobilisation de plusieurs tirs ultrasonores pour gagner en rapport signal sur bruit, ...). Cette activation du mode actif peut être très rapide et effectuée à la demande, puisqu'étant indépendant du passage de véhicules. En d'autres termes, le procédé selon l'invention en mode passif peut servir de *déclencheur* à un système en mode actif. Le mode actif peut aussi être *déclenché* de manière systématique après chaque passage de train, ou de manière planifiée à une période sans passage de train ou bien encore à la demande d'un opérateur.

Il est décrit un système pour l'inspection d'un rail, comprenant :- un rail instrumenté par au moins un capteur, ledit capteur étant *associé* au rail, et étant configuré pour acquérir des signaux de mesure de grandeurs caractéristiques d'ondes se propageant dans le rail lors du passage d'un train ou d'un véhicule roulant sur le rail ;- des ressources de calcul et/ou de mémoire configurées pour déterminer une fonction représentative de la réponse impulsionnelle du rail à partir du ou des signaux de mesure.

Dans un mode de réalisation, le système comprend en outre un ou plusieurs circuits GNSS associés avec un ou plusieurs capteurs de manière à horodater les signaux mesurés par lesdits points de capteurs.

Chaque capteur peut être associé avec son propre module GNSS. Comme décrit précédemment, il existe des solutions pour mutualiser l'électronique onéreuse. Les mesures des capteurs peuvent aussi être synchronisées par d'autres moyens, si seule une partie des capteurs bénéficient d'un horodatage GNSS

Dans un mode de réalisation, les capteurs sont arrangés de manière centralisée, ou décentralisée, ou distribuée. Les capteurs peuvent en effet être arrangés de différentes manières (centralisée, pair-à-pair, hybride, etc). Les capteurs peuvent échanger des données (pour la synchronisation et/ou pour la transmission des signaux). Les calculs peuvent être locaux et/ou effectués à distance (Cloud, éléments ou nœuds mutualisés).

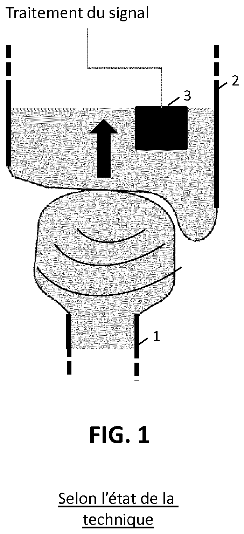

La figure 1 illustre une solution connue dans l'état de la technique, i.e. sans instrumentation de la voie ferrée.

Le rail 1 transmet des ondes guidées causées par le passage d'une roue 2, lesquelles ondes sont mesurées par un ou plusieurs capteurs sans contact 3. Les capteurs de type sans contact sont généralement fixés sur l'engin roulant lui-même, sur un système fixé à l'avant du train. Ce dispositif ne mesure les ondes que sur la partie roulante du rail, i.e. la partie haute du rail (« tête » ou « champignon »), et pas dans la totalité de la section du rail, ce qui constitue une limitation significative.

Les capteurs sans contact 2 sont en outre généralement coûteux et souvent fragiles.

Par ailleurs, le fait que le(s) capteur(s) soient lié au train signifie que les défauts sont détectés uniquement lors du passage du train. Or, pour des questions de coût, de telles inspections ne sont pas très fréquentes. Si une rupture franche est détectée, il est généralement trop tard. Les cas d'utilisation sont généralement limités à des opérations de maintenance effectuées à de faibles vitesses, si bien qu'il n'est pas envisageable de disposer un tel dispositif sur les trains commerciaux, et donc bénéficier d'une inspection fréquente.

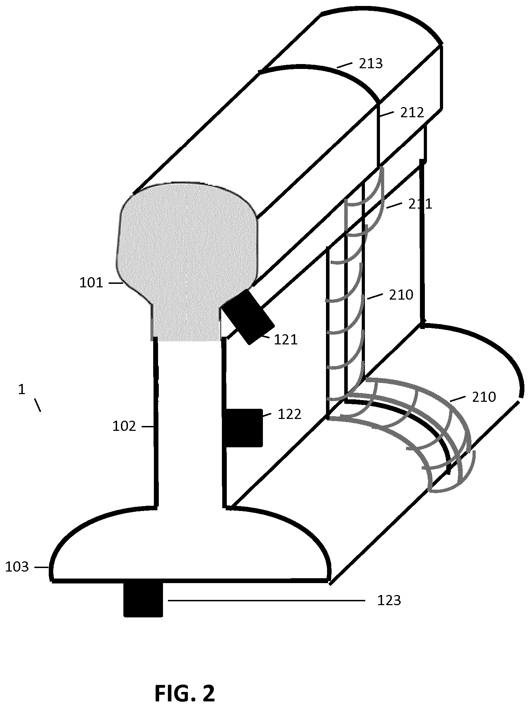

La figure 2 illustre un mode de réalisation de l'invention avec un rail instrumenté par un ou plusieurs capteurs (121,122,123).

La figure 2 montre un rail 1, dont la section constante comprend plusieurs sous-parties : la « tête » ou « champignon » 101, l' « âme » 102 du rail, et le « patin » 103. Les capteurs, de différentes natures, peuvent être diversement distribués (121,123) le long de la voie ou du rail.

Un capteur peut être placé à différents endroits dans, sur, sous ou à proximité du rail. Par exemple, un capteur 121 peut être noyé dans la masse de la tête du rail. Un capteur 122 peut être collé sur l'une ou l'autre paroi ou face de l'âme du rail (intérieure ou extérieure). Un capteur 123 peut être placé entre le rail et le ballast (lit de pierres ou de graviers). Les positions avantageuses des capteurs sont décrites ci-après.

Une voie de chemin de fer est composée de deux rails. En pratique et *a priori,* les deux rails peuvent être considérés comme étant indépendants (les effets transverses via le ballast ou les traverses sont négligeables ou peuvent être filtrés). De même, le croisement de trains en sens inverse a un effet négligeable sur la structure d'un seul rail.

Cet aspect d'indépendance structurelle dans le cas ferroviaire ne préjuge pas par exemple de politiques de sécurité qui peuvent considérer les deux rails. Par exemple, un défaut sur un rail à une certaine position peut inciter à investiguer l'autre rail, au même niveau. De fait, les défauts sur l'un ou l'autre des deux rails d'une même voie peuvent impliquer des causes et/ou des effets qui ne sont pas indépendants.

Les modes de réalisation de l'invention décrits dans ce document concernent « un » rail, mais sont évidemment applicables aux deux rails d'une même voie, simultanément ou non, ou à tout type de rail (rail-guide, etc). L'invention n'est pas limitée à un ou deux rails ; dans certains systèmes, il peut y avoir 1, 2, 3 ou plus de rails.

La présente invention se distingue de la solution illustrée à la figure 1 par de nombreuses différences. L'instrumentation *passive in situ* selon l'invention est très avantageuse au regard de l'état de la technique, notamment en matière de *portée* (distance de localisation d'un défaut), de *périmètre* (toutes les parties de la section du rail), de *précision* (granularité fine des défauts détectés), *d'énergie* et de fréquence d'inspection.

La déperdition de l'énergie injectée par le train roulant dans les rails est essentiellement fonction des discontinuités du rail (soudures entre rails, présence d'éclisses, de systèmes d'aiguillages, etc). Sans ces discontinuités, la théorie voudrait que l'amoindrissement du signal soit très faible étant donné que le métal du rail est un solide élongé à section constante.

La « profondeur de vue » est de fait bien meilleure selon l'invention. Du fait de la grande quantité d'énergie dégagée par le passage d'un véhicule roulant sur les rails et de qualité des signaux manipulés, un défaut peut être détecté à quelques kilomètres de la position courante du véhicule, permettant par exemple un freinage d'urgence (pour une rame TGV, les distances d'arrêt en exploitation normale sont de l'ordre de quelques kilomètres). En d'autres termes, l'arrangement selon l'invention peut permettre de détecter des anomalies à plusieurs kilomètres du train, ce qui peut permettre un freinage d'urgence, ou une adaptation de la vitesse ou une reconfiguration du trafic.

Par ailleurs, chaque point du rail peut être analysé deux fois : une fois en amont du passage du train, et une fois en aval de celui-ci.

### Périmètre

La (a) quantité d'énergie et (b) la richesse en fréquences du bruit causé par un train roulant en exploitation nominale (*a fortiori* par un TGV) est telle que, via des temps d'acquisition appropriés, il est possible de sonder pleinement la structure. Selon l'invention, les mesures des ondes propagées sont effectuées dans *toutes les parties de la section* du rail (101, 102, 103) et permettent donc de détecter des fissures ou d'autres défauts dans presque la totalité de la section du rail.

### Précision

Modulo l'instrumentation, les temps d'acquisition et les conditions de roulement (poids à l'essieu, vitesse), des tests expérimentaux laissent penser que la localisation de défauts localisés dans toute partie de section du rail, à une précision centimétrique voire millimétrique et à plusieurs kilomètres est atteignable. Dans des conditions dégradées ou contraintes, la localisation rapide de rupture franche est possible à plusieurs kilomètres.

### Energie

Les approches proposées sont donc énergétiquement avantageuses. Dit autrement, la quantité d'énergie injectée dans le rail est significativement supérieure à celle injectée dans le cas d'une inspection en mode actif.

Dans le cas ferroviaire, comme le contact roue-rail génère une grande quantité d'énergie mécanique et en particulier *élastodynamique* (e.g. vibrations, chocs, etc), la méthode passive permet de contrôler de plus grandes distances que la méthode active, et cela pour un même nombre de capteurs utilisés. L'énergie mécanique peut aussi être « statique » (au sens où elle peut concerner des contraintes ou précontraintes accumulées dans les rails, qui peuvent se libérer brusquement, voire brutalement).

Par ailleurs, un avantage majeur de l'invention découle du passage régulier des trains sur la voie. Avantageusement, tous les trains circulant sur une voie donnée, de gabarits variables qui plus est (e.g. poids par essieu, vitesse du train), participent à l'exploration en « continu » de l'état des voies. L'état des voies peut ainsi être mis à jour et exploré de diverses manières.

Dans un mode de réalisation spécifique, en substitution ou en complément du trafic normal sur la voie, un véhicule spécifiquement appareillé peut inspecter les voies (e.g. poids à l'essieu très important, utilisation de systèmes à percussion ou vibratoires spécifiques pour injecter spécifiquement des fréquences de résonances ou d'intérêt).

Des systèmes d'excitation peuvent également être installés de manière fixe et/ou amovible le long de la voie.

### Fréquence d'inspection

A l'inverse de l'état de la technique de la Fig. 1 qui nécessite le passage d'un train spécifiquement instrumenté pour l'inspection et limité en vitesse, la présente invention potentiellement exploite le passage de tous les trains sur la voie, permettant ainsi plusieurs inspections par jour.

### Positions des capteurs

La distance maximale de propagation ne tient pas seulement à la dissipation au sein du matériau (qui est faible dans le cas de solides) mais tient surtout aux *perturbations géométriques* du guide. Dans le patin 103 les fixations sur les traverses limitent la propagation à quelques mètres maximum. Dans l'âme 102 ce sont les soudures 210 entre deux rails successifs qui vont réfléchir une petite partie de l'onde à chaque passage (les rails sont soudés entre eux tous les 18 m à 36 m environ). Ceci est généralement dû à la variation de section locale du guide d'onde en raison du bourrelet de soudure. Sur le champignon 101, le bourrelet de soudure est généralement arasé (212, 213), sauf *sous* le champignon (211). Sous le champignon, la réflexion au passage de la soudure 211 est très limitée, ce qui permet de considérer des propagations sur des très longues distances (position du capteur selon 121, sous le champignon et sans entraver la traversée par les roues des véhicules circulants). Alternativement, ou en complément, un capteur peut être placé selon 122 i.e. sur l'âme du rail (paroi interne ou externe).

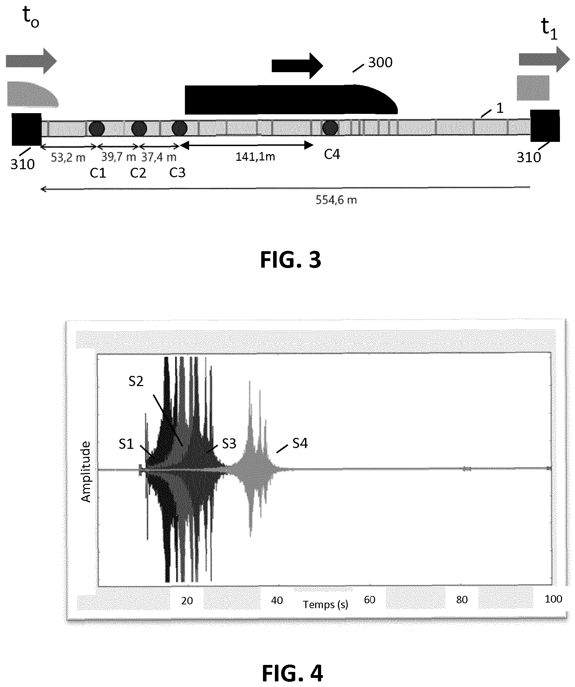

La figure 3 illustre le passage d'un train sur un exemple de voie instrumentée selon l'invention.

Le train 300 circule (roue non représentée) sur un rail 1 qui comprend une pluralité de capteurs, notés C1, C2, C3 et C4 (leur nombre Cn est sans contrainte, il peut y avoir un capteur tous les kilomètres, aussi bien que des dizaines, des centaines voire des milliers de micro-capteurs par mètre). Les segments de rails sont fixés entre eux 310 par des éclisses et/ou par des soudures. Une éclisse de chemin de fer est une pièce métallique servant à raccorder deux rails consécutifs d'une voie ferrée. Les éclisses sont apposées par paire, de part et d'autre du rail, à l'aide de boulons ou d'autres pièces de serrage.

### Nature des capteurs

Selon les modes de réalisation, les capteurs peuvent être de différentes natures. Dans l'exemple qui est illustré, pour une détection de rupture franche, des capteurs *piézoélectriques* sont couplés.

Selon les modes de réalisation, peuvent être utilisés (éventuellement en combinaison) : des capteurs piézoélectriques, des fibres optiques avec réseau de Bragg ou encore des capteurs magnéto-acoustiques.

Les capteurs peuvent être de différentes tailles, depuis l'échelle macroscopique jusqu'aux dispositifs de type MEMS, voire des nano-machines.

Les capteurs utilisables par les procédés selon l'invention sont actuellement significativement moins onéreux que les capteurs sans contact.

L'instrumentation des voies ferrées, ou de parties de celles-ci devient économiquement viable (et/ou évolueront favorablement dans le futur).

### Distribution des capteurs (e.g. espacement)

Dans l'exemple qui est illustré, les capteurs sont espacés de plusieurs dizaines de mètres.

Dans certains modes de réalisation, plusieurs capteurs sont disposés dans, sous, sur ou à proximité du rail (des différentes sous-sections).

Dans un mode de réalisation, un ou plusieurs capteurs sont intégrés nativement dans chaque segment de rail.

Dans un mode de réalisation, le placement des capteurs sur la section du rail ou de la structure peut être modifié, permettant ainsi de contrôler d'autres parties de la section du rail.

Dans un mode de réalisation, l'espacement inter-capteur peut être modifié (depuis quelques dizaines ou centaines de mètres, voire kilomètre pour le cas ferroviaire). La densité de capteurs peut être ajustée localement (les aiguillages peuvent mobiliser beaucoup de capteurs, comparativement à des grandes lignes droites moins susceptibles d'endurer des contraintes mécaniques fortes et/ou d'être détériorées).

### Couplage

Dans un mode de réalisation avantageux, les capteurs sont *fixés sur* ou *en contact* avec la structure du rail. Cet arrangement produit généralement des signaux de très bonne qualité du point de vue fréquentiel et en matière d'amplitudes des signaux. La qualité de signal à traiter est généralement de meilleure qualité que les capteurs sans contact.

Toutefois, dans certains modes de réalisation, il est possible d'utiliser des capteurs *sans contact.* La moindre qualité de signal peut en effet être compensée par du post-traitement et/ou des temps d'acquisition plus longs.

Dans un mode de réalisation, les capteurs sont couplés au rail de manière permanente (ou irréversible). En pratique, la fixation ou l'association peut être mécanique et/ou chimique et/ou électromagnétique. Les capteurs peuvent par exemple être maintenus par des serre-joints (passant sous le rail dans le ballast, par exemple pour ne pas gêner l'exploitation de la voie. D'autres méthodes d'attache comprennent les associations par colle, par soudure, par magnétisme ou électro-aimant, par ressort, par vérin, etc.

Dans certains modes de réalisation, les capteurs sont amovibles (le couplage ou l'association est temporaire ou réversible). De fait, l'instrumentation peut être évolutive. Dans un mode de réalisation, un ou plusieurs capteurs sont placés ou déplacés par des robots ou des drones ou des véhicules de maintenance. Dans un mode de réalisation, les capteurs comprennent des moyens de déplacement autonomes et se déplacent seuls (soit sur commande, soit en raison d'un système logique embarqué). Les emplacements sur le rail ou la section du rail peuvent être continuellement optimisés (e.g. armada de drones, déplacement locaux, etc). Dans un mode de réalisation, un ou plusieurs capteurs sont connectés et/ou autonomes, (e.g. déplacement par MEMS, logique distribuée en pair à pair, groupes autonomes de drones indépendants, etc)

Dans un mode de réalisation, un ou plusieurs capteurs sont protégés (e.g. intempéries, malveillances, etc) par des mesures techniques de protection (e.g. grilles, clefs, alarmes, dissimulation, etc).

La figure 4 illustre un exemple d'enregistrement des ondes guidées au passage d'un véhicule roulant. La figure 4 représente par exemple les signaux de tension obtenus en sortie des capteurs C1, C2, C3 et C4, respectivement S₁, S₂, S₃ et S₄.

Dans l'exemple, les signaux sont ceux reçus par les capteurs C1, C2, C3 et C4 au passage d'un véhicule roulant à 45 km/h sur la voie instrumentée.

L'enregistrement des signaux mesurés par les capteurs est déclenché *simultanément* sur tous les capteurs à l'approche d'un véhicule roulant. La durée de l'acquisition (t₀, t₁) inclut l'approche du véhicule, son passage au-dessus de tous les capteurs, et s'étend jusqu'à que le véhicule soit loin des capteurs (par exemple ici, une centaine de mètres).

### Synchronisation

Dans l'exemple illustré à la figure 3, les capteurs sont par exemple branchés directement à un oscilloscope enregistrant la tension électrique aux bornes des capteurs. Ces signaux représentent les ondes au niveau des capteurs en fonction du temps. L'utilisation d'un unique instrument de mesure garantit avantageusement la synchronisation des mesures des différents capteurs entre eux. L'acquisition doit être simultanée et synchronisée entre aux moins deux capteurs.

Dans d'autres modes de réalisation, des moyens de synchronisation ou de resynchronisation divers peuvent être utilisés. Par exemple, il peut être défini et utilisé des « hubs » ou nœuds de mesure pour un ou plusieurs capteurs donnés, lesquels sont dotés par exemple de capacités de communication sans fil (3G, 4G, 5G, Wifi, Wimax, etc), la synchronisation des signaux se faisant *a posteriori.*

### Fréquence d'échantillonnage

La fréquence d'échantillonnage peut varier, par exemple en fonction des phénomènes d'intérêts). Plus la fréquence est élevée (e.g. haute fréquence >1 MHz), plus les mesures seront fines et concerneront des défauts de structure de petites dimensions. A l'inverse, des fréquences basses (e.g. dizaines de KHz) seront associées aux défauts majeurs.

Le déclenchement du début de la mesure peut être effectué à différents instants, par exemple lorsque le véhicule est à grande distance (>1km), ou si le véhicule se trouve au-dessus du capteur, ou bien encore si le véhicule a dépassé le capteur.

La durée des mesures (temps d'acquisition des signaux) peut être modifiée ou modifiable ou configurable. En fonction de la chaîne métrologique, une durée d'acquisition de quelques secondes peut être suffisante.

Le post-traitement des signaux mesurés par les capteurs C1 à C4 (voir figure 3 et 4) quant à lui peut être extrêmement rapide (de l'ordre de quelques microsecondes, en fonction de la puissance de calcul à disposition).

Dans un mode de réalisation, le post-traitement consiste à réaliser l'inter-corrélation entre les signaux de bruit d'ondes élastiques dans le rail mesurés par deux capteurs différents formant une paire de capteur. Sous certaines hypothèses, le résultat de cette inter-corrélation correspond à une fonction représentative de la réponse impulsionnelle de l'ensemble formé par le rail et les deux capteurs.

Cette analyse permet ainsi de reconstruire des signaux équivalents (appelés « signaux passifs ») à ceux qui auraient été émis puis reçus de manière active (un transducteur à la position de l'un des capteurs émet et l'autre capteur reçoit) et ainsi de tirer des conclusions sur *l'état du rail* entre les deux capteurs considérés. Cette méthode passive permet d'obtenir les mêmes informations sur la propagation des ondes dans le milieu d'intérêt que ce que fournit une méthode active plus commune.

### Imagerie

Dans un mode de réalisation, le procédé comprend en outre une étape d'imagerie du rail. Cette étape est entièrement facultative. En entrée sont fournis des signaux mesurés par une pluralité de capteurs et/ou transducteurs; en sortie, il est obtenu une image de la structure (ici le rail). Cette image permet de visualiser les défauts internes ou surfaciques.

Cette imagerie peut être obtenue de différentes manières, utilisées, seules ou en combinaison, notamment par méthodes TFM, SAFT, MUSIC, Excitelet, MVDR, et RAPID. Les acronymes sont spécifiés et décrits ci-après.

La technique d'imagerie par focalisation en tous points (en anglais « *Total Focusing Method* », acronyme TFM) consiste à procéder à l'acquisition de la série complète de signaux reliant tous les éléments en émission/réception et à sommer de manière cohérente les signaux en tout point de la zone imagée.

La technique d'imagerie peut se faire par synthèse d'ouverture (en anglais *« Synthetic aperture focusing technique »,* acronyme SAFT). Cette technique permet l'obtention d'une image qui soit facile à interpréter, en incluant l'influence des transducteurs, leur couplage et la suppression du bruit de l'image.

La technique d'imagerie par classification de signaux multiples (en anglais *«MUltiple SIgnal Classification »* acronyme MUSIC) est une méthode à haute résolution qui s'appuie notamment sur des modèles paramétriques de signal (e.g. propriétés particulières de la matrice de covariance du signal, permettant de séparer l'espace des données en deux sous-espaces, l'espace signal engendré par les sinusoïdes, et l'espace bruit qui est son complémentaire orthogonal). En particulier, la méthode MUSIC s'appuie sur l'espace du bruit.

Dans la technique d'imagerie par *« Excitelet »* (pas de traduction en français), le signal résiduel est corrélé avec les signaux d'une librairie, appelés atomes, correspondants aux signaux résiduels calculés avec un modèle de propagation qui comprend plusieurs modes et prend en compte l'effet dispersif du matériau et l'impédance électromécanique des transducteurs.

La technique d'imagerie par filtrage spatial Capon (en anglais *«Minimum variance distortionless response »* acronyme MVDR) est également une variante de filtrage spatial.

Des algorithmes de reconstruction pour l'inspection probabiliste des dommages (en anglais *« Reconstruction Algorithm for the Probabilistic Inspection of Damage »,* acronyme RAPID) peuvent être utilisés. Ce type de cartographie se fonde sur l'analyse statistique des différences de certaines caractéristiques des signaux mesurés dans un état de référence (sans défaut) et dans l'état courant (potentiellement endommagé).

Il est noté que l'étape d'imagerie peut rétroagir (e.g. conditionner ou asservir) les étapes du procédé selon l'invention (e.g. exploitation des capteurs, manipulation paramètres internes ou externes de manière à explorer plus finement le rail).

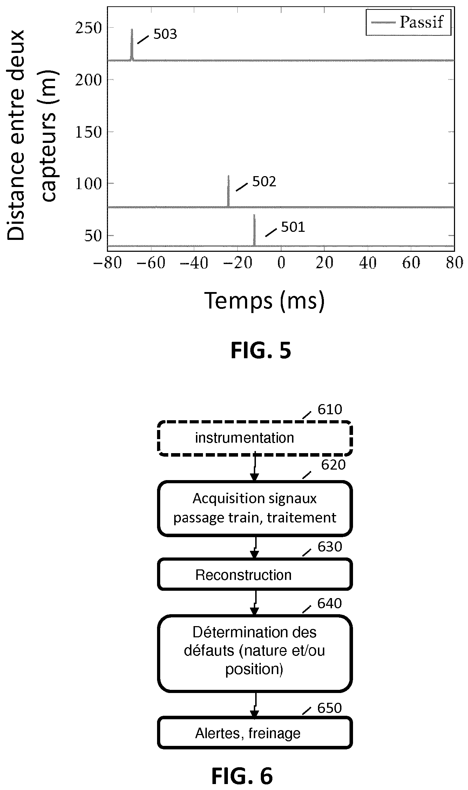

La figure 5 illustre un exemple d'analyse et de traitement des signaux enregistrés par les capteurs C1 à C4.

Pour trois paires de capteurs positionnés selon la figure 3 (C1-C2, C1-C3 et C1-C4), les signaux de bruit mesurés simultanément (voir figure 4) sont alors post-traités pour en déterminer une fonction représentative de la réponse impulsionnelle.

La figure 5 présente ainsi des exemples de signaux reconstruits à partir d'un calcul d'inter-corrélation entre les capteurs C1 et C2 (501), C1 et C3 (502), et C1 et C4 (503). Il est obtenu trois signaux temporels ordonnés selon la distance entre les capteurs considérés. Sur chacun des signaux, un pic ou « point Dirac » est visible, lequel représente l'onde se propageant d'un capteur à l'autre. C'est cette même onde qui serait obtenue en actif si un émetteur avait été placé en C1 et trois récepteurs en C2, C3 et C4.

L'abscisse négative est liée au sens du mouvement du train (de gauche à droite), si le trajet avait été fait en sens inverse les pics seraient apparus pour des temps positifs.

On voit ainsi facilement que le temps de parcours de l'onde augmente avec la distance de propagation (ce qui valide la convergence du calcul vers une fonction représentative de la réponse impulsionnelle). Ainsi, la présence de ces Dirac indique qu'une onde a réussi à se propager dans le rail entre C1 et C2 (resp. C1 et C3 ainsi que C1 et C4), et donc qu'il n'y a pas de rupture du rail entre tous ces capteurs.

L'inter-corrélation C₁₂ des signaux S₁ et S₂ mesurés par les capteurs C₁ et C₂ est par exemple obtenue en effectuant le calcul suivant : ${C}_{12} \left(t\right) = \int {S}_{1} \left(τ\right) {S}_{2} \left(t+τ\right) dτ .$

Les amplitudes et formes respectives des signaux 501, 502 et 503 (ici normalisés) peuvent être comparées avec les amplitudes théoriques de la propagation des ondes dans le rail (ou avec des mesures standard à périmètre constant e.g. type de rail, vitesse, poids, ou bien encore entre les différents segments de rails traversés par le train considéré) afin d'affiner le diagnostic en cas de présence de défaut.

La figure 6 illustre des exemples d'étapes du procédé selon l'invention, notamment de détermination d'un défaut et de prise de décision.

A l'étape 610, une voie ferrée est instrumentée sur tout ou partie de son parcours, avec des capteurs dont la nature et la distribution (e.g. espacements, positions sur ou dans la section du rail, etc) peuvent varier. Cette étape peut être faite en une ou plusieurs fois, préalablement à la mise en œuvre du procédé selon l'invention. Dans un mode de réalisation, l'instrumentation évolue au cours du temps (mais pas pendant les mesures).

A l'étape 620, des signaux mesurés par les capteurs sont reçus, et éventuellement synchronisés s'ils ne le sont pas déjà. Différents moyens de synchronisation des mesures sur une même horloge peuvent être utilisés, entre les différents capteurs ou groupe de capteurs. Alternativement ou en complément, des ressources de post-traitement peuvent permettre de resynchroniser des signaux mesurés sur des horloges non synchronisées.

A l'étape 630, les signaux synchronisés sont manipulés (post traitement, e.g. auto-corrélation ou inter-corrélation, C-3, ou FIP) de manière à déterminer la fonction représentative de la réponse impulsionnelle du rail, puis de l'information physique en est extraite à l'étape 640.

A l'étape 640, en se fondant sur les résultats de l'étape précédente, un ou plusieurs défauts ou anomalies peuvent être déterminées, de diverses manières, notamment par comparaison de la fonction représentative de la réponse impulsionnelle du rail avec des modèles théoriques (e.g. représentations mathématiques) ou empiriques existants (e.g. mesures passées, abaques, heuristiques, etc).

Plus généralement, lors de l'étape 640 des méthodes d'Analyse de forme, d'Analyse amplitude/fréquence, de détection de Conversion de modes guidés et d'Imagerie telles que décrites ci-dessus sont appliquées à un signal correspondant à la fonction représentative de la réponse impulsionnelle obtenue à l'étape 630.

Dans un mode de réalisation particulier, avec un rail instrumenté de deux capteurs positionnés en des points A et B, les signaux reconstruits entre A et B au passage du train (en mode « passif » donc) peuvent révéler l'absence d'un pic au temps de vol correspondant à la propagation de l'onde entre A et B, ce qui peut signifier une rupture franche du rail entre A et B. Il est alors possible de déclencher une vérification en mode « actif » par exemple par émission d'une onde guidée dans le rail par un transducteur C positionné à proximité du capteur B (ou par B directement si celui-ci est un transducteur), à destination de A. Le diagnostic peut être confirmé ou infirmé (e.g. A ou B défaillant). Des confirmations multiples peuvent être décidées pour commander le freinage du train. La séquence passive-active peut aussi être conduite de manière à explorer dans des bandes de fréquences absentes ou insuffisantes dans les signaux reconstruits par voie passive les différents défauts suspectés.

Dans un mode de réalisation, un ou plusieurs seuils peuvent être utilisés, i.e. comparé avec les valeurs mesurées et reconstruites. Dans un mode de réalisation, le ou les seuils peuvent être déterminés par des mesures effectuées dans un état connu (sain) du rail (calibration, abaques, etc).

Par exemple, si l'amplitude du signal reconstruit ne dépasse pas une valeur préétablie, un défaut ou une rupture peut être annoncé (message, alerte) à l'homme et/ou la machine.

Des techniques d'apprentissage peuvent être mises en œuvre.

Selon les modes de réalisation, le mode de réaction à la détection d'un défaut peut être en boucle ouverte (alerte au conducteur du train) ou en boucle fermée (freinage d'urgence enclenché automatiquement), par exemple en fonction de la distance entre la position courante du train et la localisation du défaut (le cas échéant).

Dans un mode de réalisation, des étapes de procédé de prise de décision plus avancés peuvent être implémentées (centralisation, décentralisation, distribution, etc).

Concernant le post-traitement, des capacités de calcul (e.g. au niveau des capteurs) et/ou de stockage peuvent être locales et/ou à distance (informatique dans les nuages ou « Cloud computing »).

Dans un mode de réalisation, un ou plusieurs capteurs peuvent être des capteurs connectés (e.g. communication entre les multiples groupes de capteurs et/ou une unité centrale de traitement).

Une ou plusieurs logiques peuvent constituer le système de décision ou d'aide à la décision. Optionnellement, des méthodes de post traitement avancé peuvent permettre une interprétation des mesures allant au-delà de la simple détection de rupture franche, par exemple pour détection des amorces de rupture sous forme de corrosion ou fissuration.

Dans un mode de réalisation, un capteur est indépendant en termes énergétiques (alimentation par énergie solaire et/ou vibratoire et/ou éolien, etc.)

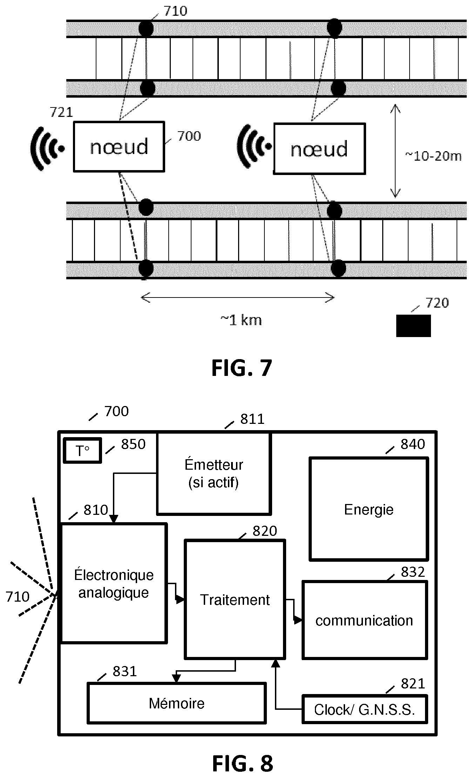

La figure 7 illustre un mode de réalisation de l'invention.

Dans un mode de réalisation, entièrement facultatif, un « nœud » ou « hub » 700 (mutualisant les ressources électroniques) peut piloter plusieurs capteurs physiques ou « points de mesure ». Chaque point de mesure 710 peut comprendre un ou plusieurs capteurs (de type 121 et/ou 122). Un nœud 700 peut comprendre des ressources de communication 721 (filaire ou sans-fil, e.g. 4G, 5G, Wifi, Ethernet, fibre optique, etc.), de manière à centraliser les données dans un centre de traitement 720 (e.g. synchronisation, alertes, etc). Les données peuvent être capturées et transmises en continu, ou bien encore être récupérées une fois par jour, ou à la volée lors du passage d'un train, etc. Dans un mode de réalisation, un nœud peut avoir la faculté de piloter les capteurs à la fois en mode transmission et en mode pulse-écho en actif et en passif (nœud « générique »). Dans certains modes de réalisation, un ou plusieurs nœuds peuvent être optimisés en termes de fonctionnalités et de coût.

La figure 8 illustre un exemple de structure d'un nœud pour la capture de signaux selon l'invention.

Un nœud 700 selon les modes de réalisation de l'invention peut comprendre différents composants. Un nœud peut comprendre un émetteur dans le cas actif. En mode passif, il n'y a pas d'émetteur puisque l'énergie du train est utilisée. Les signaux des capteurs 710 sont reçus par un circuit électronique analogique/digital puis traités par un circuit 820 (FPGA, CPU ou autre) qui communique les données 832 et/ou les stocke 831 localement. Dans un mode de réalisation, un nœud peut comprendre un module GNSS (acronyme pour l'anglais « Global Navigation Satellite System », e.g. GPS ou Galileo ou GLONASS ou Beidou-2 (COMPASS). Ce circuit GNSS est avantageux pour repérer la position du nœud une fois disposé sur la voie, mais également pour dater les signaux précisément (une datation précise à quelques nanosecondes permet une synchronisation en post-traitement).

Concernant la source d'énergie 840, différents modes de réalisation sont décrits. Dans une approche passive, les données à transmettre peuvent être volumineuses (typiquement quelques mégaoctets Mo au lieu de quelques octets ou centaines d'octets dans le cas actif). En fonction des protocoles de communication mis en œuvre, cela peut-être un point à prendre en compte.

Dans un mode de réalisation, le nœud de capteurs est autonome et communicant. Dans un mode de réalisation, le nœud récupère de l'énergie vibratoire grâce aux capteurs piézoélectriques collés au rail et/ou au souffle d'air au passage d'un train (mini-éolienne, par exemple lorsque le système est dans un tunnel), et/ou d'un panneau solaire. Dans un mode de réalisation, le nœud comprend une batterie. Dans d'autres modes de réalisation, des systèmes de stockage d'énergie plus transitoires sont utilisés (e.g. super condensateurs, par récupération d'énergie au passage d'un train donc sur un temps très court).

L'invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique. Les moyens ou ressources informatiques peuvent être centralisés et/ou être distribués (*"Cloud computing*"), éventuellement avec ou selon des technologies de pair-à-pair et/ou de virtualisation et/ou de redondance. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul. La mise en œuvre informatique de l'invention peut utiliser des systèmes centralisés (e.g. client-serveur ou maître-esclave) et/ou des systèmes distribués (e.g. architecture de type pair-à-pair utilisant des ressources informatiques accessibles, éventuellement de manière opportuniste e.g. réseaux ad hoc, etc.). Le système (ou ses variantes) implémentant une ou plusieurs des étapes du procédé peut utiliser un ou plusieurs circuits électroniques dédiés ou un circuit à usage général. Le procédé peut aussi être mis en œuvre sur une machine de calcul reprogrammable (un processeur ou un micro contrôleur, par exemple) exécutant un programme comprenant une séquence d'instructions, ou sur une machine de calcul dédiée (par exemple un ensemble de portes logiques comme un FPGA ou un ASIC, ou tout autre module matériel). Un circuit dédié peut notamment améliorer les performances. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple un logiciel d'application, un micro logiciel, un microcode, APIs, web services, ou toute autre forme d'instruction d'ordinateur) qui peut être utilisé pour programmer un ou plusieurs processeurs pour mettre en œuvre des étapes du procédé.

Le fait que les intertitres soient soulignés n'indique aucunement que les caractéristiques concernées soient essentielles.

## Revendications

1. Procédé pour l'inspection d'un rail, ledit rail étant instrumenté par au moins un capteur recevant des ondes se propageant dans le rail lors du passage d'un train ou d'un véhicule roulant sur le rail, et étant instrumenté par au moins un transducteur apte à générer des sources de bruit élastodynamique, le procédé comprenant les étapes consistant à :
- recevoir (620) des signaux de mesure depuis ledit au moins un capteur, lors du passage d'un train ou d'un véhicule roulant sur le rail;
- à partir du ou des signaux mesurés, déterminer (630) une fonction représentative de la réponse impulsionnelle du rail ;
- générer des ondes dans le rail à partir dudit au moins un transducteur ;
- mesurer au moins une grandeur caractéristique desdites ondes à l'aide dudit au moins un capteur ;
- déterminer (640) l'existence d'un ou de plusieurs défauts dans le rail à partir de ladite fonction représentative de la réponse impulsionnelle du rail, et en cas de défaut approfondir l'analyse du ou des défauts à partir de ladite au moins une grandeur caractéristique.

2. Procédé selon la revendication 1, comprenant en outre l'étape consistant à déterminer la position d'un ou de plusieurs défauts dans le rail à partir de la fonction représentative de la réponse impulsionnelle du rail.

3. Procédé selon la revendication 2, comprenant en outre l'étape consistant à caractériser un ou plusieurs défauts, notamment en matière de nature, de taille, d'orientation dans l'espace ou de géométrie, par analyse d'amplitude et/ou de fréquence et/ou par analyse de la forme du signal et/ou par analyse du spectre fréquentiel des signaux de mesure et/ou de la fonction représentative de la réponse impulsionnelle du rail et/ou par identification d'un changement de mode de propagation d'au moins une des ondes se propageant dans le rail.

4. Procédé selon la revendication 2, comprenant en outre l'étape consistant à caractériser un ou plusieurs défauts, en faisant varier une ou plusieurs positions des capteurs et/ou en sélectionnant des capteurs parmi une pluralité, lors de différentes itérations de l'étape de détermination, chaque étape de détermination étant réalisée à partir des signaux de mesure issus des capteurs sélectionnés.

5. Procédé selon l'une quelconque des revendications précédentes, dans lequel l'étape consistant à déterminer une fonction représentative de la réponse impulsionnelle du rail est réalisée par auto-corrélation ou inter-corrélation entre les signaux mesurés.

6. Procédé selon l'une quelconque des revendications précédentes, l'étape consistant à déterminer une fonction représentative de la réponse impulsionnelle du rail étant réalisée
- par corrélation de coda de corrélations entre capteurs,
et/ou
- par une étape de Filtre Inverse Passif, ladite étape comprenant les étapes consistant à : a) découper temporellement le signal temporel mesuré en une pluralité de sous-vecteurs ou pseudos-sources; b) décomposer en valeurs singulières des matrices de propagation monochromatique déterminées à partir des pseudos-sources dans le domaine fréquentiel; c) obtenir la fonction représentative de la réponse impulsionnelle dans le domaine temporel par transformée de Fourier inverse.

7. Procédé selon l'une quelconque des revendications précédentes, dans lequel les mesures sont effectuées simultanément par le ou les capteurs et/ou sont synchronisées.

8. Procédé selon l'une quelconque des revendications précédentes,
- dans lequel le train ou le véhicule roulant sur le rail est associé à un ou plusieurs paramètres internes comprenant un type de train, un type de roue, un poids à l'essieu et/ou une vitesse de roulement ;
- dans lequel à l'étape de réception le procédé comprend l'étape consistant à acquérir des signaux de mesure en fonction d'un ou plusieurs paramètres externes comprenant un premier instant relatif au début des mesures, un deuxième instant relatif à la fin des mesures, une durée des mesures, et/ou une fréquence d'échantillonnage ;
- et dans lequel le procédé comprend en outre une étape consistant à modifier ou ajuster un ou plusieurs des paramètres externes en fonction d'un ou plusieurs paramètres internes.

9. Procédé selon l'une quelconque des revendications 1 à 4, dans lequel un défaut est déterminé par application de seuils prédéfinis, lesdits seuils prédéfinis étant déterminés par référence à un état réel, par exemple par rapport à un état du rail étant connu comme sain ou par rapport à un état calibré dudit rail, ou par référence à un état simulé du rail.

10. Procédé selon l'une quelconque des revendications précédentes, le rail étant instrumenté par au moins deux capteurs distants l'un de l'autre et recevant des ondes se propageant dans le rail lors du passage d'un train ou d'un véhicule roulant sur le rail, le procédé comprenant les étapes consistant à :
- recevoir des signaux de mesure depuis lesdits au moins deux capteurs, lors du passage d'un train ou d'un véhicule roulant sur le rail;
- déterminer une fonction représentative d'une réponse impulsionnelle du rail, avantageusement de l'ensemble formé par le rail et les au moins deux capteurs, en effectuant un calcul d'inter-corrélation entre les signaux mesurés.

11. Procédé selon l'une quelconque des revendications précédentes, comprenant une étape consistant à comparer les fonctions représentatives de la réponse impulsionnelle du rail déterminées lors de différentes étapes de détermination réalisées lors de passages successifs de trains ou de véhicules sur le rail.

12. Procédé selon la revendication 1, comprenant en outre une étape consistant à émettre une alerte au conducteur et/ou au système de régulation du trafic et/ou une étape consistant à émettre une commande de freinage, lesdites étapes étant déclenchée en fonction du résultat de l'étape de détermination de l'existence d'un ou de plusieurs défauts.

13. Procédé selon la revendication 1, la réponse impulsionnelle du rail étant la réponse impulsionnelle de l'ensemble formé par le rail et ledit au moins un capteur.

14. Système pour l'inspection d'un rail, ledit rail étant instrumenté par au moins un capteur et au moins un transducteur, ledit au moins un capteur étant configuré pour acquérir des signaux de mesure de grandeurs caractéristiques d'ondes se propageant dans le rail lors du passage d'un train ou d'un véhicule roulant sur le rail, ledit au moins un transducteur étant apte à générer des sources de bruit élastodynamique, le système comprenant ledit rail, l'au moins un capteur, l'au moins un transducteur et des ressources de calcul et/ou de mémoire configurées pour :
- déterminer une fonction représentative de la réponse impulsionnelle du rail à partir du ou des signaux de mesure ;
- générer des ondes dans le rail à partir dudit au moins un transducteur, et mesurer au moins une grandeur caractéristique desdites ondes à l'aide dudit au moins un capteur ; et
- déterminer l'existence ou non d'un ou de plusieurs défauts dans le rail à partir de ladite fonction représentative de la réponse impulsionnelle du rail et en cas de défaut approfondir l'analyse du ou des défauts à partir de ladite au moins une grandeur caractéristique.

15. Système selon la revendication14, chaque capteur étant choisi parmi des transducteurs piézoélectriques et/ou des capteurs à réseau de Bragg sur fibre optique, et/ou des transducteurs magnéto-acoustique de type EMAT et/ou des transducteurs magnétostrictifs.

16. Système selon la revendication 14 ou15, un ou plusieurs capteurs étant fixés sous le champignon du rail et/ou sur l'âme du rail.

17. Système selon l'une quelconque des revendications 14 à16, comprenant en outre un ou plusieurs circuits GNSS associé avec un ou plusieurs capteurs de manière à horodater les signaux mesurés par lesdits points de capteurs.

18. Produit programme d'ordinateur, ledit programme d'ordinateur comprenant des instructions de code qui conduisent le système pour l'inspection d'un rail selon l'une des revendications 14 à 17, à effectuer les étapes du procédé selon l'une quelconque des revendications 1 à 13, lorsque ledit programme est exécuté sur un ordinateur.

## Patentansprüche

1. Verfahren zur Überprüfung einer Schiene, wobei die Schiene mit mindestens einem Sensor ausgestattet ist, der Wellen empfängt, die sich bei der Durchfahrt eines Zug oder eines auf der Schiene fahrenden Fahrzeugs in der Schiene ausbreiten, sowie mit mindestens einem Wandler ausgestattet ist, der in der Lage ist, elastodynamische Störquellen zu erzeugen, wobei das Verfahren die folgenden Schritte umfasst:
- Empfangen (620) von Messsignalen von dem mindestens einen Sensor während der Durchfahrt eines Zuges oder eines auf der Schiene fahrenden Fahrzeugs;
- basierend auf dem oder den gemessenen Signalen, Bestimmen (630) einer die Impulsantwort der Schiene darstellenden Funktion;
- Erzeugen von Wellen in der Schiene unter Verwendung des mindestens einen Wandlers;
- Messen mindestens einer Kenngröße der Wellen mithilfe des mindestens einen Sensors;
- Feststellen (640) des Vorliegens eines oder mehrere Defekte in der Schiene basierend auf der die Impulsantwort der Schiene darstellenden Funktion, und im Falle eines Defekts Vertiefen der Analyse des oder der Defekte basierend auf der mindestens einen Kenngröße.

2. Verfahren nach Anspruch 1, weiter umfassend den Schritt des Bestimmens der Position des einen oder der mehreren Defekte in der Schiene basierend auf der die Impulsantwort der Schiene darstellenden Funktion.

3. Verfahren nach Anspruch 2, weiter umfassend den Schritt des Charakterisierens eines oder mehrerer Defekte, insbesondere hinsichtlich Art, Größe, räumlicher Ausrichtung oder Geometrie, durch Amplituden- und/oder Frequenzanalyse und/oder durch Analyse der Signalform und/oder durch Analyse des Frequenzspektrums der Messsignale und/oder der die Impulsantwort der Schiene darstellenden Funktion und/oder durch Identifizierung einer Änderung der Ausbreitungsmode mindestens einer der sich in der Schiene ausbreitenden Wellen.

4. Verfahren nach Anspruch 2, weiter umfassend den Schritt des Charakterisierens eines oder mehrerer Defekte, indem bei verschiedenen Iterationen des Bestimmungsschritts eine oder mehrere Positionen der Sensoren variiert werden und/oder Sensoren aus einer Vielzahl ausgewählt werden, wobei jeder Bestimmungsschritt basierend auf den von den ausgewählten Sensoren ausgegebenen Messsignalen durchgeführt wird.

5. Verfahren nach einem der vorstehenden Ansprüche, wobei der Schritt des Bestimmens einer die Impulsantwort der Schiene darstellenden Funktion durch Autokorrelation oder Interkorrelation zwischen den gemessenen Signalen durchgeführt wird.

6. Verfahren nach einem der vorstehenden Ansprüche, wobei der Schritt des Bestimmens einer die Impulsantwort der Schiene darstellenden Funktion durchgeführt wird
- durch Korrelation der Coda-Korrelationen zwischen den Sensoren,
und/oder
- durch einen Schritt eines passiven Inversfilters, wobei der Schritt die folgenden Schritte umfasst: a) zeitliche Aufteilung des gemessenen Zeitsignals in eine Vielzahl von Teilvektoren oder Pseudoquellen; b) Singulärwertzerlegung der aus den Pseudoquellen im Frequenzbereich bestimmten monochromatischen Ausbreitungsmatrizen; c) Ermittlung der die Impulsantwort darstellenden Funktion im Zeitbereich mittels inverser Fourier-Transformation.

7. Verfahren nach einem der vorstehenden Ansprüche, wobei die Messungen gleichzeitig durch den oder die Sensoren durchgeführt und/oder synchronisiert werden.

8. Verfahren nach einem der vorstehenden Ansprüche,
- wobei dem Zug oder dem auf der Schiene fahrenden Fahrzeug ein oder mehrere interne Parameter zugeordnet sind, die einen Zugtyp, einen Radtyp, eine Achslast und/oder eine Fahrgeschwindigkeit umfassen;
- wobei das Verfahren in dem Schritt des Empfangens den Schritt des Erfassens von Messsignalen in Abhängigkeit von einem oder mehreren externen Parametern umfasst, die einen ersten Zeitpunkt, der sich auf den Beginn der Messungen bezieht, einen zweiten Zeitpunkt, der sich auf das Ende der Messungen bezieht, eine Messdauer und/oder eine Abtastrate umfassen;
- wobei das Verfahren weiter einen Schritt des Veränderns oder Anpassens eines oder mehrerer der externen Parameter in Abhängigkeit von einem oder mehreren internen Parametern umfasst.

9. Verfahren nach einem der Ansprüche 1 bis 4, wobei ein Defekt durch Anwendung vordefinierter Schwellenwerte ermittelt wird, wobei die vordefinierten Schwellenwerte unter Bezugnahme auf einen Ist-Zustand bestimmt werden, beispielsweise im Vergleich zu einem als einwandfrei bekannten Zustand der Schiene oder im Vergleich zu einem kalibrierten Zustand der Schiene oder unter Bezugnahme auf einen simulierten Zustand der Schiene.

10. Verfahren nach einem der vorstehenden Ansprüche, wobei die Schiene mit mindestens zwei voneinander beabstandeten Sensoren ausgestattet ist, die bei der Durchfahrt eines Zuges oder eines auf der Schiene fahrenden Fahrzeugs sich in der Schiene ausbreitende Wellen empfangen, wobei das Verfahren die folgenden Schritte umfasst:
- Empfangen von Messsignalen von den mindestens zwei Sensoren während der Durchfahrt eines Zuges oder eines auf der Schiene fahrenden Fahrzeugs;
- Bestimmen einer eine Impulsantwort der Schiene darstellenden Funktion, vorzugsweise der aus der Schiene und den mindestens zwei Sensoren bestehenden Anordnung, indem eine Interkorrelationsberechnung zwischen den gemessenen Signalen durchgeführt wird.

11. Verfahren nach einem der vorstehenden Ansprüche, umfassend einen Schritt des Vergleichens der die Impulsantwort der Schiene darstellenden Funktionen, die bei verschiedenen Bestimmungsschritten bestimmt wurden, die bei aufeinanderfolgenden Durchfahrten von Zügen oder Fahrzeugen auf der Schiene durchgeführt wurden.

12. Verfahren nach Anspruch 1, weiter umfassend einen Schritt des Ausgebens einer Warnung an den Fahrer und/oder an das Verkehrsleitsystem und/oder einen Schritt des Ausgebens eines Bremsbefehls, wobei die Schritte in Abhängigkeit vom Ergebnis des Schritts zum Feststellen des Vorliegens eines oder mehrerer Defekte ausgelöst werden.

13. Verfahren nach Anspruch 1, wobei die Impulsantwort der Schiene die Impulsantwort der aus der Schiene und dem mindestens einen Sensor gebildeten Anordnung ist.

14. System zur Überprüfung einer Schiene, wobei die Schiene mit mindestens einem Sensor und mindestens einem Wandler ausgestattet ist, wobei der mindestens eine Sensor so konfiguriert ist, dass er Messsignale von Kenngrößen von Wellen erfasst, die sich bei der Durchfahrt eines Zuges oder eines auf der Schiene fahrenden Fahrzeugs in der Schiene ausbreiten, wobei der mindestens eine Wandler in der Lage ist, elastodynamische Störquellen zu erzeugen, wobei das System die Schiene, den mindestens einen Sensor, den mindestens einen Wandler sowie Rechen- und/oder Speicherressourcen umfasst, die konfiguriert sind zum:
- Bestimmen einer die Impulsantwort der Schiene darstellenden Funktion, basierend auf dem oder den gemessenen Signalen;
- Erzeugen von Wellen in der Schiene unter Verwendung des mindestens einen Wandlers, und Messen mindestens einer Kenngröße der Wellen mithilfe des mindestens einen Sensors; und
- Feststellen des Vorliegens oder Nichtvorliegens eines oder mehrere Defekte in der Schiene basierend auf der die Impulsantwort der Schiene darstellenden Funktion, und im Falle eines Defekts Vertiefen der Analyse des oder der Defekte basierend auf der mindestens einen Kenngröße.

15. System nach Anspruch 14, wobei jeder Sensor ausgewählt ist aus piezoelektrischen Wandlern und/oder Bragg-Gitter-Sensoren auf Glasfaser und/oder magnetoakustischen Wandlern vom Typ EMAT und/oder magnetostriktiven Wandlern.

16. System nach Anspruch 14 oder 15, wobei ein oder mehrere Sensoren unter dem Schienenkopf und/oder am Schienensteg befestigt sind.

17. System nach einem der Ansprüche 14 bis 16, weiter umfassend eine oder mehrere GNSS-Schaltungen, die einem oder mehreren Sensoren zugehörig sind, um die von den Sensorpunkten gemessenen Signale mit einem Zeitstempel zu versehen.

18. Computerprogrammprodukt, wobei das Computerprogramm Codeanweisungen umfasst, die das System zur Überprüfung einer Schiene nach einem der Anspruch 14 bis 17 veranlassen, die Schritte des Verfahrens nach einem der Ansprüche 1 bis 13 durchzuführen, wenn das Programm auf einem Computer ausgeführt wird.

## Claims

1. Method for inspecting a rail, said rail being instrumented with at least one sensor receiving waves propagating in the rail during the passage of a train or of a vehicle running on the rail, and being instrumented with at least one transducer capable of generating sources of elastodynamic noise, the method comprising the steps consisting of:
- receiving (620) measurement signals from said at least one sensor, during the passage of a train or of a vehicle running on the rail;
- from the measured signal or signals, determining (630) a function representative of the impulse response of the rail;
- generating waves in the rail from said at least one transducer;
- measuring at least one characteristic quantity of said waves using said at least one sensor;
- determining (640) the existence of one or more defects in the rail from said function representative of the impulse response of the rail, and, in the event of a defect, further analyzing the defect or defects from said at least one characteristic quantity.

2. Method according to claim 1, further comprising the step consisting of determining the position of one or more defects in the rail from the function representative of the impulse response of the rail.

3. Method according to claim 2, further comprising the step consisting of characterizing one or more defects, in particular in terms of nature, size, orientation in space or geometry, by amplitude and/or frequency analysis and/or by analysis of the shape of the signal and/or by analysis of the frequency spectrum of the measurement signals and/or of the function representative of the impulse response of the rail and/or by identifying a change in the propagation mode of at least one of the waves propagating in the rail.

4. Method according to claim 2, further comprising the step consisting of characterizing one or more defects, by varying one or more positions of the sensors and/or by selecting sensors from among a plurality, during different iterations of the determining step, each determining step being performed from the measurement signals originating from the selected sensors.

5. Method according to any one of the preceding claims, wherein the step consisting of determining a function representative of the impulse response of the rail is performed by autocorrelation or cross-correlation between the measured signals.

6. Method according to any one of the preceding claims, the step consisting of determining a function representative of the impulse response of the rail being performed
- by correlation of the coda of correlations between sensors,
and/or
- by a Passive Inverse Filter step, said step comprising the steps consisting of: a) temporally dividing the measured time signal into a plurality of subvectors or pseudo-sources; b) performing singular value decomposition of monochromatic propagation matrices determined from the pseudo-sources in the frequency domain; c) obtaining the function representative of the impulse response in the time domain by inverse Fourier transform.

7. Method according to any one of the preceding claims, wherein the measurements are performed simultaneously by the sensor or sensors and/or are synchronized.

8. Method according to any one of the preceding claims,
- wherein the train or the vehicle running on the rail is associated with one or more internal parameters comprising a train type, a wheel type, an axle load and/or a running speed;
- wherein, at the receiving step, the method comprises the step consisting of acquiring measurement signals as a function of one or more external parameters comprising a first instant relating to the start of the measurements, a second instant relating to the end of the measurements, a duration of the measurements, and/or a sampling frequency;
- and wherein the method further comprises a step consisting of modifying or adjusting one or more of the external parameters as a function of one or more internal parameters.

9. Method according to any one of claims 1 to 4, wherein a defect is determined by applying predetermined thresholds, said predetermined thresholds being determined by reference to an actual state, for example relative to a state of the rail known to be sound or relative to a calibrated state of said rail, or by reference to a simulated state of the rail.

10. Method according to any one of the preceding claims, the rail being instrumented with at least two sensors spaced apart from one another and receiving waves propagating in the rail during the passage of a train or of a vehicle running on the rail, the method comprising the steps consisting of:
- receiving measurement signals from said at least two sensors, during the passage of a train or of a vehicle running on the rail;
- determining a function representative of an impulse response of the rail, advantageously of the assembly formed by the rail and the at least two sensors, by performing a cross-correlation calculation between the measured signals.

11. Method according to any one of the preceding claims, comprising a step consisting of comparing the functions representative of the impulse response of the rail determined during different determining steps performed during successive passages of trains or vehicles on the rail.

12. Method according to claim 1, further comprising a step consisting of issuing an alert to the driver and/or to the traffic regulation system and/or a step consisting of issuing a braking command, said steps being triggered as a function of the result of the step of determining the existence of one or more defects.

13. Method according to claim 1, the impulse response of the rail being the impulse response of the assembly formed by the rail and said at least one sensor.

14. System for inspecting a rail, said rail being instrumented with at least one sensor and at least one transducer, said at least one sensor being configured to acquire measurement signals of characteristic quantities of waves propagating in the rail during the passage of a train or of a vehicle running on the rail, said at least one transducer being capable of generating sources of elastodynamic noise, the system comprising said rail, the at least one sensor, the at least one transducer and computing and/or memory resources configured to:
- determine a function representative of the impulse response of the rail from the measurement signal or signals;
- generate waves in the rail from said at least one transducer, and measure at least one characteristic quantity of said waves using said at least one sensor; and
- determine the existence or absence of one or more defects in the rail from said function representative of the impulse response of the rail and, in the event of a defect, further analyze the defect or defects from said at least one characteristic quantity.

15. System according to claim 14, each sensor being selected from among piezoelectric transducers and/or fiber Bragg grating sensors, and/or EMAT-type electromagnetic acoustic transducers and/or magnetostrictive transducers.

16. System according to claim 14 or 15, one or more sensors being fixed under the rail head and/or on the rail web.

17. System according to any one of claims 14 to 16, further comprising one or more GNSS circuits associated with one or more sensors so as to timestamp the signals measured by said sensor points.

18. Computer program product, said computer program comprising code instructions which cause the system for inspecting a rail according to any one of claims 14 to 17 to perform the steps of the method according to any one of claims 1 to 13, when said program is executed on a computer.
